# EUROPEAN PATENT APPLICATION

(11) **EP 4 509 366 A1**
(43) Date of publication of application: **19.02.2025**
(21) Application number: 23815308.4
(22) Date of filing: 02.06.2023
(51) Int. Cl.: B60R 9/058, B60J 10/00, B60J 10/70, B60J 7/00

(54) **SUNROOF GLASS ASSEMBLY, VEHICLES, AND LUGGAGE CARRIER**

(30) Priority: 02.06.2022 CN 202210620550
(71) Applicant: Fuyao Glass Industry Group Co., Ltd., Fuzhou, Fujian 350300 (CN)
(72) Inventor: DU, Xiaoping, Fuzhou, Fujian 350300 (CN); REN, Peng, Fuzhou, Fujian 350300 (CN); YANG, Jing, Fuzhou, Fujian 350300 (CN); LI, Weijun, Fuzhou, Fujian 350300 (CN)
(74) Representative: Patentanwälte Olbricht Buchhold Keulertz
(86) International application number: PCT/CN2023/097927
(87) International publication number: WO 2023/232131

(57) **Abstract**

A sunroof glass assembly comprising: a glass panel (1); a sealing structure (2) enclosing an edge of the glass panel (1), the glass panel (1) is configured to be sealingly connected to a top frame (4) of a vehicle by means of the sealing structure (2), and the sealing structure (2) being provided with at least two detachable movable sealing structures (21) which are located on two sides of the top frame (4); wherein in a state in which the movable sealing structures (21) are detached, a mounting space (5) is formed between the glass panel (1) and the top frame (4), and a mounting structure (62) of a luggage carrier (6) can extend into the mounting space (5) to be connected to the top frame (4). A vehicle and a luggage carrier are also comprised. The mounting space (5) is provided by detaching the movable sealing structures (21), and it is unnecessary to provide the mounting space (5) of the luggage carrier (6) by cutting the glass panel (1) into a special shape, this enables the mounting of the sunroof glass assembly on the top frame (4) of the vehicle, at the same time as meeting the requirement for mounting the luggage carrier (6) , without increasing the difficulty in machining and shaping of the glass panel (1), reducing the mounting efficiency, or reducing the transparent visible area of the glass panel (1).

## Description

### Related Application

The present disclosure claims the priority of the Chinese invention patent with an application number of 202210620550.8, an invention title of "sunroof glass assembly, vehicle, and luggage carrier" and filed on June 2, 2022.

### Technical Field

The present disclosure relates to the technical field of vehicles, and particularly to a sunroof glass assembly, a vehicle, and a luggage carrier.

### Background

The panoramic sunroof without a sunshade curtain is increasingly popular. For some vehicles, besides a sunroof glass assembly, a luggage carrier for placing luggage is also mounted on the top, and then a side mounting edge for mounting the luggage carrier is added to a top frame. In order to avoid the side mounting edge, a glass panel of the panoramic sunroof needs to be cut into a special shape. On one hand, the difficulty in machining, shaping and mounting of the glass panel is increased, and the optical state of the specialshaped glass panel is not good. On the other hand, a transparent visible area of the panoramic sunroof is reduced.

### Summary

The present disclosure aims to provide a sunroof glass assembly, a vehicle and a luggage carrier, so as to solve the technical problems that a glass panel of a panoramic sunroof needs to be cut into a special shape to avoid a side mounting edge of the luggage carrier at present, which increases the difficulty in machining, shaping and mounting of a glass panel and reduces a transparent visual area of the panoramic sunroof.

The above objective of the present disclosure can be achieved by the following technical solution:
The present disclosure provides a sunroof glass assembly, including: a glass panel; a sealing structure enclosing an edge of the glass panel, the glass panel is configured to be sealingly connected to a top frame of a vehicle by means of the sealing structure, and the sealing structure being provided with at least two detachable movable sealing structures which are located on two sides of the top frame; in which in a state where the movable sealing structures are detached, a mounting space is formed between the glass panel and the top frame, and a mounting structure of a luggage carrier is capable of extending into the mounting space to be connected to the top frame.

The present disclosure further provides a vehicle, including the aforementioned sunroof glass assembly.

The present disclosure further provides a luggage carrier, in which in a state where the movable sealing structure is removed, a mounting structure of the luggage carrier extends into the mounting space to be connected to the top frame of the aforementioned vehicle.

The present disclosure further provides a vehicle, including: a glass panel; a fixed sealing structure, wherein the glass panel is configured to be sealingly connected to a top frame of the vehicle through the fixed sealing structure, and the fixed sealing structure is provided with at least two mounting recesses; and two luggage carriers each having at least one mounting structure, which extends from the mounting recess to an inner side of the glass panel to be connected to the top frame.

The present disclosure has the following characteristics and advantages:
In the sunroof glass assembly, the vehicle and the luggage carrier according to the present disclosure, a sealing structure is provided with at least two detachable movable sealing structures which are located on two sides of the top frame; after the movable sealing structures are detached, a mounting space into which a mounting structure of the luggage carrier extends is be formed between the glass panel and the top frame, so that the mounting structure of the luggage carrier is capable of being connected to the top frame, and two luggage carriers can be mounted on two sides of the top frame; as the mounting space is provided by the movable sealing structures having been detached, it is unnecessary to provide the mounting space of the luggage carrier by cutting the glass panel into a special shape, this enables the mounting of the sunroof glass assembly on the top frame of the vehicle in the present disclosure, at the same time as meeting the requirement for mounting the luggage carrier, without increasing the difficulty in machining and shaping of the glass panel, reducing the mounting efficiency, or reducing the transparent visible area of the glass panel .

### Brief Description of the Drawings

In order to explain the technical solutions in the embodiments of the present disclosure more clearly, the drawings required in the description of the embodiments will be briefly introduced below. Obviously, the drawings involved in the following description only illustrate some embodiments of the present disclosure, and those of ordinary skill in the art can obtain other drawings from these drawings without paying any creative effort.
FIG. 1 illustrates a bottom view of a sunroof glass assembly according to the present disclosure.
FIG. 2 illustrates a bottom view of a sunroof glass assembly after a movable sealing structure is removed according to the present disclosure.
FIG. 3 illustrates a structural diagram of a movable sealing strip according to the present disclosure.
FIG. 4 illustrates a mounting cross-sectional view of a movable sealing strip according to the present disclosure.
FIG. 5 illustrates a cross-sectional view of a clamping structure after a movable sealing strip is removed according to the present disclosure.
FIG. 6 illustrates a mounting cross-sectional view of a fixed sealing strip according to the present disclosure.
FIG. 7 illustrates a side view of a bonding block according to the present disclosure.
FIG. 8 illustrates a schematic diagram of a bonding surface of a bonding block according to the present disclosure.
FIG. 9 illustrates a bottom view of a sunroof glass assembly on a vehicle according to the present disclosure.
FIG. 10 illustrates a top view of a sunroof glass assembly on a vehicle according to the present disclosure.
FIG. 11 illustrates a mounting schematic diagram of a luggage carrier according to the present disclosure.

In which,
1: glass panel; 11: inner side surface of glass panel; 12: outer side surface of glass panel; 2: sealing structure; 21: movable sealing structure; 211: movable sealing strip; 212: movable sealing portion; 2121: first side surface of movable sealing portion; 2122: second side surface of movable sealing portion; 213: movable mounting portion; 2131: protruding strip; 2132: bump; 2133: guide ramp; 2134: end bump; 214: movable water-blocking portion; 215: supporting member; 22: fixed sealing structure; 221: fixing sealing strip; 222: fixing sealing portion; 223: fixed mounting portion; 224: fixed water -blocking portion; 225: bonding fixing layer; 3: clamping structure; 31: clamping sheet; 311: first end of clamping sheet; 312: second end of clamping sheet; 32: bonding block; 321: pre-bonding adhesive layer; 322: fixed adhesive layer; 33: clamping recess; 4: top frame; 41: first recess; 42: second recess; 43: luggage carrier fixing structure; 5: mounting space; 6: luggage carrier; 61: luggage carrier body; 62: mounting structure; 621: clamping end; 622: threaded connecting end; 63: supplementary sealing structure; 631: first supplementary sealing strip; and 632: second supplementary sealing strip.

### Description of the Embodiments

The technical solutions in the embodiments of the present disclosure will be clearly and completely described below with reference to the drawings. Obviously, those described are only a part, rather than all, of the embodiments of the present disclosure. Based on the embodiments in the present disclosure, any other embodiment obtained by those of ordinary skill in the art without paying any creative effort should fall within the protection scope of the present disclosure.

### Embodiment 1

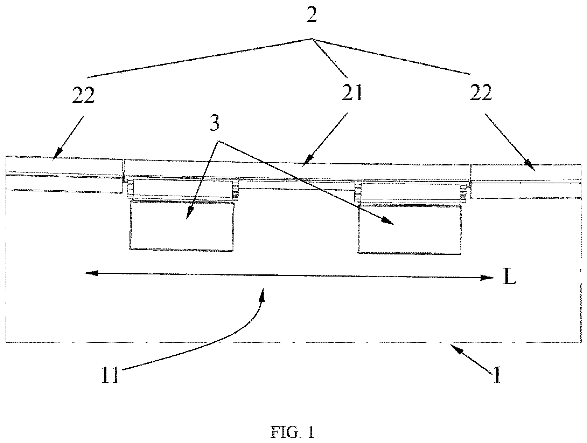

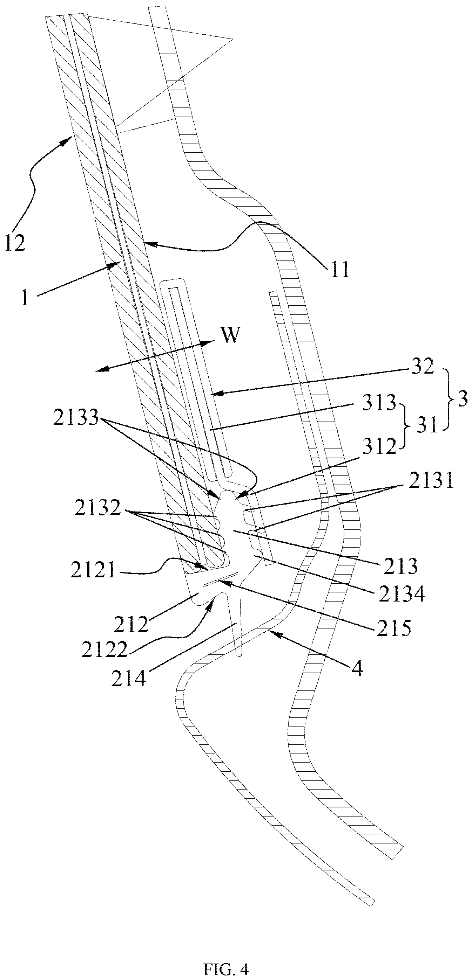

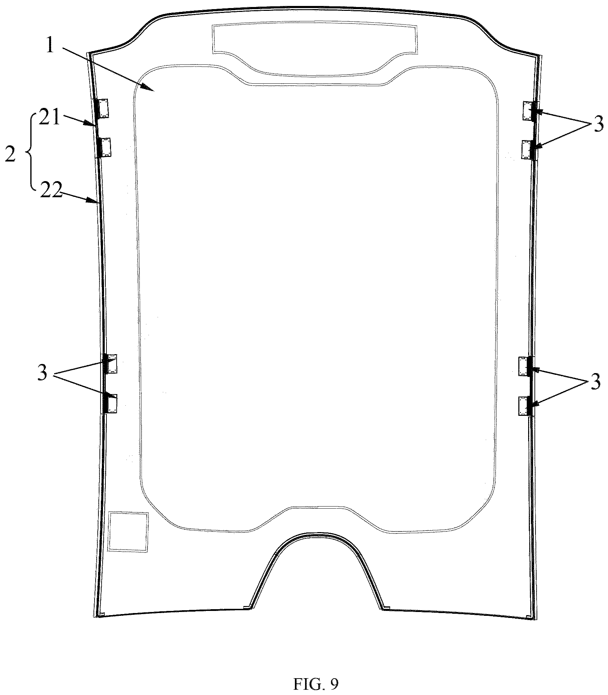

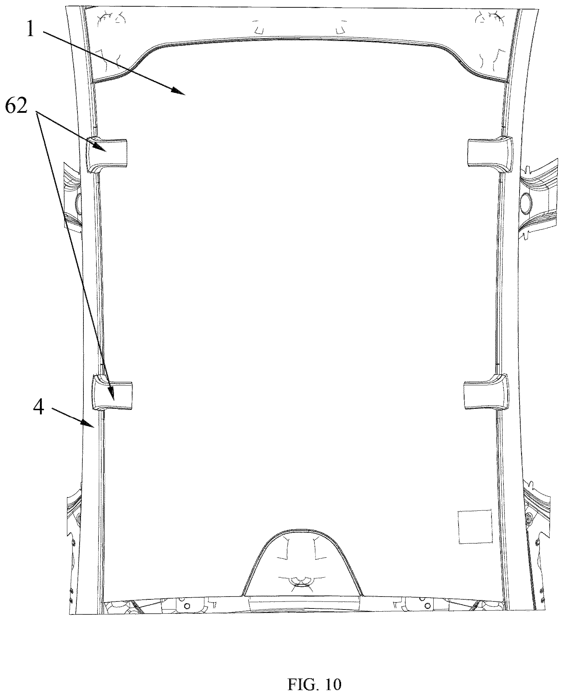

As illustrated in FIGS. 1, 2, 4, 9, 10 and 11, the present disclosure provides a sunroof glass assembly, which includes a glass panel 1; and a sealing structure 2 enclosing an edge of the glass panel 1, the glass panel 1 being sealing connection to a top frame 4 of a vehicle by means of the sealing structure 2, and the sealing structure 2 being provided with at least two detachable movable sealing structures 21 which are located on two sides of the top frame 4; in which in a state where the movable sealing structures 21 are detached, a mounting space 5 is formed between the glass panel 1 and the top frame 4, and a mounting structure 62 of a luggage carrier 6 can extend into the mounting space 5 to be connected to the top frame 4. For the convenience of description, a length direction in the present disclosure is a direction L illustrated in FIG. 1, i.e., an extension direction of the glass panel 1, also a length direction of the vehicle, and a width direction in the present disclosure is a direction W illustrated in FIG. 4, i.e., a thickness direction of the glass panel 1.

In the sunroof glass assembly according to the present disclosure, the sealing structure 2 is provided with at least two detachable movable sealing structures 21 which are located on two sides of the top frame 4; after the movable sealing structures 21 are detached, a mounting space 5 into which the mounting structure 62 of the luggage carrier 6 extends can be formed between the glass panel 1 and the top frame 4, so that the mounting structure 62 of the luggage carrier 6 can be connected to the top frame 4, and two luggage carriers 6 can be mounted on two sides of the top frame 4. As the mounting space 5 is provided by the movable sealing structures 21 having been removed, it is unnecessary to provide the mounting space of the luggage carrier 6 by cutting the glass panel 1 into a special shape, so that the requirement for mounting the luggage carrier 6 can be satisfied while mounting the sunroof glass assembly on the top frame 4 of the vehicle, without increasing the difficulty in machining, shaping and mounting of the glass panel 1 or reducing the transparent visible area of the glass panel 1.

Specifically, the top frame 4 of the vehicle includes a window, the glass panel 1 is substantially rectangular, and the size of the glass panel 1 is larger than the size of the window and the size of the glass panel 1 is smaller than the size of the periphery of the top frame 4. Two luggage carriers 6 are mounted on two sides of the top frame 4, so that luggage cases or other items desired to be carried can be erected on the two luggage carriers 6. In this embodiment, the two luggage carriers 6 are located on two sides of the top frame 4 in a width direction. Optionally, the two luggage carriers are located on two sides of the top frame in a length direction. In this embodiment, the sealing structure 2 are provided with four movable sealing structures 21, and two of the movable sealing structures 21 form a group and are located at a same side of the top frame 4. Two mounting spaces 5 are formed after the two movable sealing structures 21 are detached, and each of the luggage carriers 6 includes two mounting structures 62, which extend into the two mounting spaces 5 and are connected to the top frame 4.

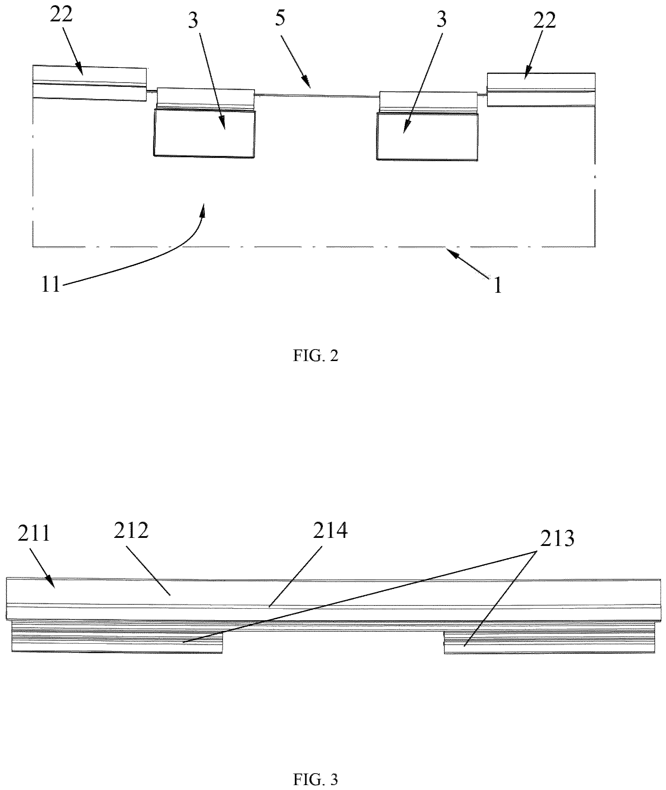

As illustrated in FIGS. 3 and 4, in the embodiment of the present disclosure, the movable sealing structure 21 includes a movable sealing strip 211, which includes a movable sealing portion 212 and at least one movable mounting portion 213 which are connected to each other, the at least one movable mounting portion 213 is detachably mounted on an inner side of the glass panel 1 through at least one clamping structure 3, and the movable sealing portion 212 is located between the edge of the glass panel 1 and the top frame 4. By disposing the movable sealing portion 212 and the movable mounting portion 213 which are connected to each other, the detachable mounting of the movable sealing strip 211 can be realized, at the same time, the sealing performance between the glass panel 1 and the top frame 4 can be ensured. The movable mounting portion 213 is detachably mounted on the inner side of the glass panel 1 through the at least one clamping structure 3, i.e., the movable mounting portion 213 is mounted on a side of the glass panel 1 close to the vehicle, which is convenient for disassembly and assembly. Optionally, the movable mounting portion is mounted on the inner side of the glass panel in any other existing detachable mounting mode.

The mounting space 5 is a space left after removal of the movable sealing structures 21, so the shape of the mounting space 5 is the same as that of the movable sealing structure 21. In this embodiment, the mounting space 5 includes a first space between the edge of the glass panel 1 and the top frame 4 left after removal of the movable sealing portion 212, and a second space between an inner side surface 11 of the glass panel 1 (i.e., a lower surface of the glass panel 1 facing the interior of the vehicle) and the top frame 4 left after removal of the movable mounting portion 213. The mounting structure 62 of the luggage carrier 6 extends through the first space into the second space and is connected to the top frame 4. Optionally, the mounting space is the first space between the edge of the glass panel and the top frame, and the mounting structure of the luggage carrier extends into the first space to be connected to the top frame or extends through the first space to the inner side of the glass panel to be connected to the top frame. Optionally, the mounting space is the second space between the inner side surface of the glass panel and the top frame, and the mounting structure of the luggage carrier extends into the second space through a gap between the edge of the glass panel and the top frame, so as to be connected to the top frame.

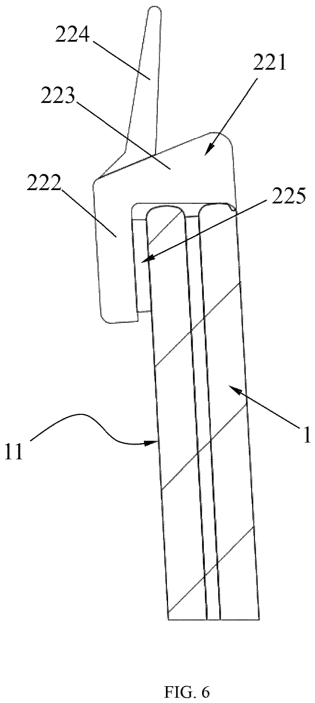

Specifically, as illustrated in FIGS. 1 and 6, the sealing structure 2 further includes a fixed sealing structure 22, which cooperates with the movable sealing structure 21 to enclose the edge of the glass panel 1. The fixed sealing structure 22 includes a fixed sealing strip 221. The fixing sealing strip 221 is mounted on the inner side surface 11 of the glass panel 1 by fixation. In this embodiment, the fixing sealing strip 221 is fixed on the inner side surface 11 of the glass panel 1 by a bonding fixing layer 225. The bonding fixing layer 225 is made of 3M glue. Optionally, the fixed sealing structure may adopt a sealing mounting structure in the sunroof glass assembly in the prior art.

As illustrated in FIGS. 1, 2, 10 and 11, in the embodiment of the present disclosure, the movable mounting portion 213 is detachably mounted on the inner side of the glass panel 1 through two clamping structures 3, a luggage carrier fixing structure 43 is disposed on the top frame 4 and located between the two clamping structures 3, and the mounting structure 62 of the luggage carrier 6 extends into the mounting space 5 and is detachably connected to the luggage carrier fixing structure 43. The movable sealing strip 211 is provided with two movable mounting portions 213 arranged at intervals along the length direction thereof. The movable mounting portion 213 of the movable sealing strip 211 is mounted on the inner side of the glass panel 1 through the two clamping structures 3, so as to improve the mounting stability of the movable sealing strip 211. By disposing the luggage carrier fixing structure 43 between the two clamping structures 3, the mounting structure 62 of the luggage carrier and the luggage carrier fixing structure 43 can be prevented from being interfered by the clamping structures 3. By detachably connecting the mounting structure 62 of the luggage carrier 6 with the luggage carrier fixing structure 43, the luggage carrier 6 is capable of being detachably mounted. When the user does not need to use the luggage carrier 6, the movable sealing structure 21 can be remounted in the mounting space 5. Thus, the luggage carrier 6 can be assembled and disassembled at any time as needed, and the integrity of the sunroof glass assembly will not be affected after the luggage carrier 6 is detached. Specifically, the cooperation between the luggage carrier fixing structure 43 and the mounting structure 62 of the luggage carrier 6 is similar to that between the existing snapping structure and clamping structure, which will not be described in detail here.

As illustrated in FIG. 4, in the embodiment of the present disclosure, a supporting member 215 is embedded in the movable sealing portion 212, and disposed to extend in a direction perpendicular to a direction in which the movable sealing portion 212 is extruded. By disposing the supporting member 215, it is possible to improve the structural strength of the movable sealing portion 212, ensure that the movable sealing strip 211 will not be deformed after repeated assembly and disassembly, and guarantee the sealing performance between the edge of the glass panel 1 and the top frame 4. Specifically, the supporting member 215 is an aluminum sheet. Optionally, the supporting member is made of any other material with higher hardness.

As illustrated in FIG. 4, the movable sealing portion 212 includes a first side surface 2121 and a second side surface 2122 which are opposite to each other. The first side surface 2121 of the movable sealing portion 212 abuts against the edge of the glass panel 1, and the second side surface 2122 of the movable sealing portion 212 is provided with a movable water blocking portion 214 which blocks a gap between the movable sealing portion 212 and the top frame 4. By disposing the movable water retaining portion 214, the water flow is prevented from flowing into the vehicle through the gap between the movable sealing portion 212 and the top frame 4.

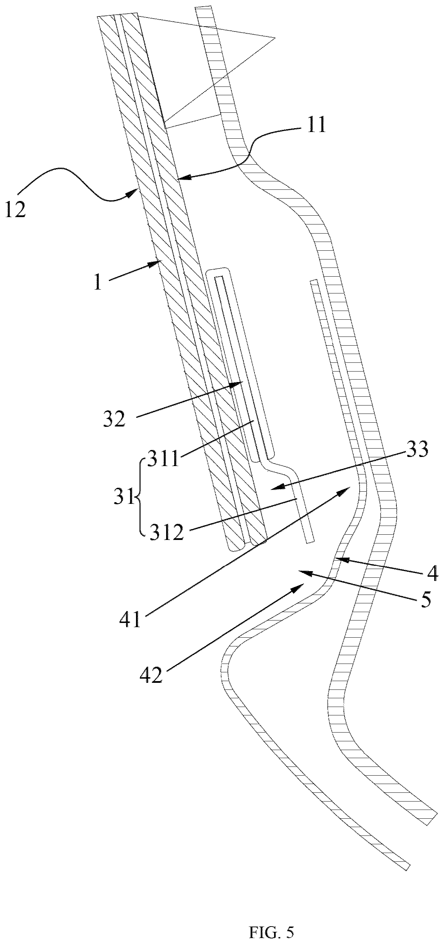

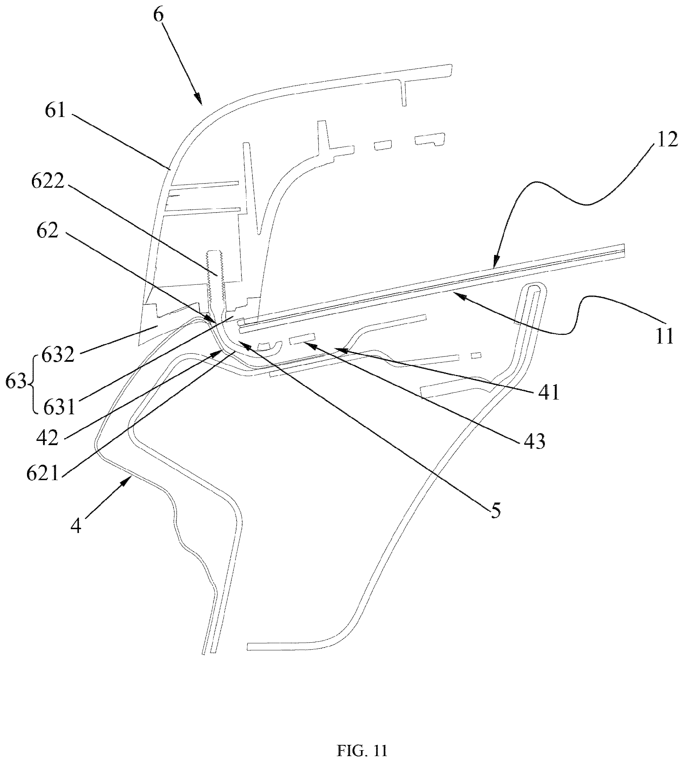

Specifically, as illustrated in FIG. 5, a first recess 41 is formed around the window on the top frame 4. An outer recess wall of the first recess 41 extends outwards to form a second recess 42. The movable water retaining portion 214 abuts against a recess wall surface of the second recess 42. As illustrated in FIG. 11, after the movable sealing strip 211 is removed, the mounting structure 62 of the luggage carrier 6 extends through the second recess 42 into the first recess 41 to be connected to the luggage carrier fixing structure 43 on the top frame 4.

As illustrated in FIG. 6, the fixed sealing strip 221 includes a fixed sealing portion 222, a fixed mounting portion 223 and a fixed water blocking portion 224. As the fixed sealing strip 221 does not need to be assembled and disassembled, the difference between the fixed mounting portion 223 and the movable sealing portion 212 is that the fixed mounting portion 223 is not provided with a protruding strip 2131 and a bump 2132, and the difference between the fixed sealing portion 222 and the movable sealing portion 212 is that the supporting member 215 is not embedded in the fixed sealing portion 222. The structure of the fixed water blocking portion 224 is the same as that of the movable water blocking portion 214, which will not be described in detail here. The movable sealing portion 212 and the fixed sealing portion 222 are flush with the outer side surface 12 of the glass panel 1 (i.e., the upper surface of the glass panel 1 facing the exterior of the vehicle).

As illustrated in FIG. 5, in the embodiment of the present disclosure, the clamping structure 3 includes a clamping sheet 31 with a first end 311 connected to an inner side surface 11 of the glass panel 1, and a second end 312 cooperated with the inner side surface 11 of the glass panel 1 to form a clamping recess 33 into which the movable mounting portion 213 is clamped. While the movable mounting portion 213 is clamped by the clamping sheet 31, the movable mounting portion 213 can abut against the inner side surface 11 of the glass panel 1, thereby ensuring the sealing performance between the glass panel 1 and the top frame 4. Specifically, the clamping sheet 31 is substantially a metal sheet structure, which has an elastic clamping force by being bent. In this embodiment, the clamping sheet 31 is molded by stamping and bending a DCO4 steel plate.

The movable mounting portion 213 includes a first side surface which abuts against the second end of the clamping sheet 31, at least one protruding strip 2131 protrudes from the first side surface of the movable mounting portion 213, and the protruding strip 2131 is obliquely disposed towards an opening of the clamping recess 33 and abuts against an inner wall surface of the clamping recess 33. The movable mounting portion 213 includes a second side surface which abuts against the inner side surface 11 of the glass panel 1, at least one bump 2132 protrudes from the second side surface of the movable mounting portion 213, and the bump 2132 abuts against the inner side surface 11 of the glass panel 1. In order to ensure that the movable mounting portion 213 can be firmly mounted and pulled out at the same time, an insertion force for inserting the movable mounting portion 213 into the clamping recess 33 and a pulling force for pulling the movable mounting portion 213 out of the clamping recess 33 can be adjusted by disposing the bump 2132 and the protruding strip 2131. By disposing the protruding strip 2131 on the first side surface of the movable mounting portion 213, an included angle between the protruding strip 2131 and the movable mounting portion 213 gradually decreases during insertion, so that the movable mounting portion 213 can be inserted into the clamping recess 33 more smoothly. When the movable mounting portion 213 moves out of the clamping recess 33 under an external force, the included angle between the protruding strip 2131 and the movable mounting portion 213 gradually increases, thereby forming a resistance to prevent the movable mounting portion 213 from coming loose, and improve the stability of the movable mounting portion, wherein an inclined direction and a direction in which the movable mounting portion 213 is inserted. By disposing the bump 2132 on the second side surface of the movable mounting portion 213, the sealing performance can be ensured, while the insertion force for inserting the movable mounting portion 213 into the clamping recess 33 and the pulling force for pulling the movable mounting portion 213 out of the clamping recess 33 can be prevented from being too large due to the excessive contact area between the second side surface and the inner side surface 11 of the glass panel 1.

Specifically, two protruding strips 2131 and an end bump 2134 are arranged at intervals on the first side surface of the movable mounting portion 213, and the end bump 2134 is disposed close to the opening of the clamping recess 33. Three bumps 2132 are arranged at intervals on the second side surface of the movable mounting portion 213. A fit clearance between either end of the movable sealing strip 211 and the fixed sealing strips 221 on the side thereof is not more than 1 mm. The length of either of the protruding strip 2131 and the bump 2132 is slightly longer than that of the clamping recess 33. The cross section of the protruding strip 2131 is substantially in a strip structure with a certain width, and the cross section of either of the end bump 2134 and the bump 2132 is substantially in a bulge-shaped structure. Therefore, the elastic deformation capability of the protruding strip 2131 is better, so that the protruding strip 2131 can better adapt to the shape of the clamping recess 33, thereby adjusting the insertion force for inserting the movable mounting portion 213 into the clamping recess 33 and the pulling force for pulling the movable mounting portion 213 out of the clamping recess 33. In addition, the bump 2132 and the end bump 2134 have poor elastic deformation capabilities, and the bump 2132 can more closely abut against the inner side surface 11 of the glass panel 1, so that the water flow can be prevented from infiltrating into the vehicle from the gap between the movable mounting portion 213 and the inner side surface 11 of the glass panel 1, and the end bump 2134 can more closely abut against the second end 312 of the clamping sheet 31, thereby improving the sealing performance between the movable mounting portion 213 and the second end 312 of the clamping sheet 31. In addition, a free end of the movable mounting portion 213 is smoothly rounded, and a guide ramp 2133 is disposed to guide the movable mounting portion 213 to be inserted into the clamping recess 33.

As illustrated in FIGS. 4 and 5, in the embodiment of the present disclosure, the first end 311 of the clamping sheet 31 is bonded and fixed to the inner side surface 11 of the glass panel 1 by a bonding block 32. By disposing the bonding block 32, the first end of the clamping sheet 31 is more firmly connected to the inner side surface 11 of the glass panel 1. Specifically, the first end of the clamping sheet 31 is inserted into a molding cavity of the bonding block 32, and the bonding block 32 is injection molded with polybutylene terephthalate (PBT) and 30% glass fiber (GF) and integrated with the clamping sheet 31 to ensure the firm bonding between the clamping sheet 31 and the bonding block 32.

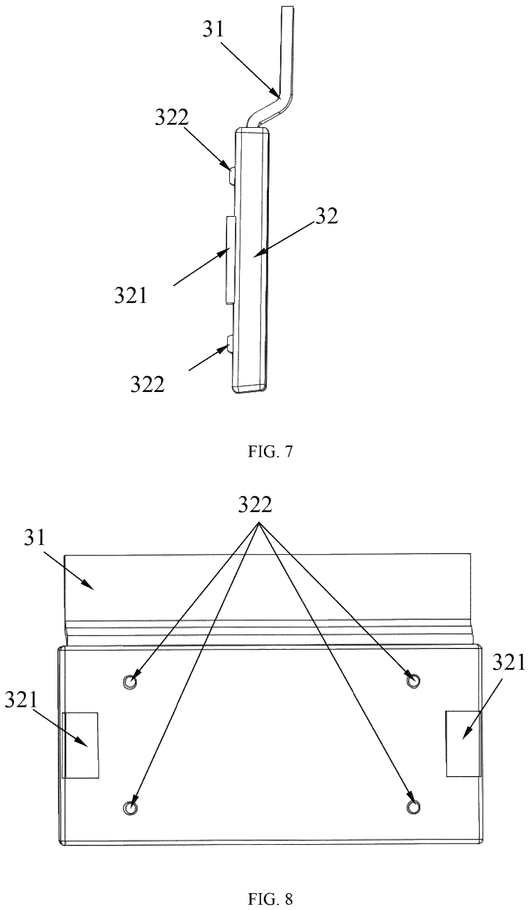

As illustrated in FIGS. 7 and 8, a bonding surface of the bonding block 32 is provided with at least one pre-bonding adhesive layer 321 and at least one fixed adhesive layer 322, wherein curing time of the pre-bonding adhesive layer 321 is shorter than that of the fixed adhesive layer 322, and a bonding capability of the fixed adhesive layer 322 is greater than that of the pre-bonding adhesive layer. By disposing the pre-bonding adhesive layer 321, the quick-curing characteristic of the pre-bonding adhesive layer 321 is utilized to realize the bonding and positioning of the bonding block 32, so as to avoid the bonding block 32 from moving and dislocating during the curing process of the fixed adhesive layer 322, and then the bonding block 32 is firmly bonded with the inner side surface 11 of the glass panel 1 by using the fixed adhesive layer 322. Specifically, the pre-bonding adhesive layer 321 is made of 3M adhesive, and the fixed adhesive layer 322 is made of PU adhesive. The pre-bonding adhesive layer 321 is substantially a rectangular block structure, and the fixed adhesive layer 322 is substantially spot structure. In this embodiment, two pre-bonding adhesive layers 321 and four fixed adhesive layers 322 are provided on the bonding surface of the bonding block 32, wherein the two pre-bonding adhesive layers 321 are disposed close to two ends of the bonding block 32, and the four fixed adhesive layers 322 are disposed in a rectangular array and located between the two pre-bonding adhesive layers 321. The pre-bonding adhesive layer 321 has a thickness of about 0.8 mm.

### Embodiment 2

As illustrated in FIGS. 1, 4, 9, 10 and 11, the present disclosure further provides a vehicle including a sunroof glass assembly. The specific structure, working principle and advantageous effect of the sunroof glass assembly in this embodiment are the same as those of the sunroof glass assembly in Embodiment 1, which will not be described in detail here. Regarding the vehicle of the present disclosure, the user can selectively mount two luggage carriers 6 on the top frame 4 of the vehicle as needed.

### Embodiment 3

As illustrated in FIGS. 1, 2, 4, 9, 10 and 11, the present disclosure further provides a luggage carrier 6, and in a state in which the movable sealing structures 21 are detached, a mounting structure 62 of the luggage carrier 6 extends into the mounting space 5 to be connected to the top frame 4 of the vehicle. The specific structure, working principle and advantageous effect of the vehicle in this embodiment are the same as those of the vehicle in Embodiment 2, which will not be described in detail here. In this embodiment, the mounting structure 62 of the luggage carrier 6 extends into the mounting space 5 to be clamped with the top frame 4 of the vehicle. Optionally, the connection mode between the mounting structure of the luggage carrier 6 and the top frame 4 may be any other feasible connection mode among the existing modes. In addition, a supplementary sealing structure 63 is disposed around the mounting structure 62 of the luggage carrier, the supplementary sealing structure 63 includes a first supplementary sealing strip 631 and a second supplementary sealing strip 632, wherein the first supplementary sealing strip 631 abuts against the outer side surface 12 of the glass panel 1, and the second supplementary sealing strip 632 abuts against the top frame 4 to prevent the water flow or other impurities from entering the vehicle from the gap between the mounting structure 62, the top frame 4 and the glass panel 1. The mounting structure 62 includes a clamping end 621 and a threaded connecting end 622. The clamping end 621 extends into the mounting space 5 to be snapped with the luggage carrier fixing structure 43 on the top frame 4, and the threaded connecting end 622 is screwed with a luggage carrier body 61.

### Embodiment 4

As illustrated in FIGS. 2, 10 and 11, the present disclosure further provides a vehicle, which includes a glass panel 1; a fixed sealing structure 22, through which the glass panel 1 is sealing connection to a top frame 4 of the vehicle, the fixed sealing structure 22 being provided with at least two mounting recess; and two luggage carriers 6 each having at least one mounting structure 62, and extending from the mounting recess to an inner side of the glass panel 1 to be connected to the top frame 4. The specific structure of the glass panel 1 in this embodiment is the same as that of the glass panel 1 in Embodiment 1, the specific structure of the fixed sealing structure 22 in this embodiment is the same as that of the fixed sealing structure 22 in Embodiment 1, the specific structure of an inner cavity of the mounting recess in this embodiment is the same as that of the mounting space 5 formed after the movable sealing structures 21 are detached in Embodiment 1, the luggage carrier 6 in this embodiment is the same as that in Embodiment 1, which will not be described in detail here.

The vehicle in this embodiment differs from the vehicle in Embodiment 2 in that the vehicle in this embodiment is not provided with the movable sealing structure 21, and instead, the luggage carrier 6 is directly mounted on the top frame 4 of the vehicle. Therefore, the glass panel 1 and the luggage carrier 6 are both mounted on the top frame 4 of the vehicle in this embodiment, and it is unnecessary to cut the glass panel 1 into a special shape, so that the difficulty in machining, shaping and mounting of the glass panel 1 will not be increased.

Those described above are only several embodiments of the present disclosure, and those skilled in the art can make various modifications or variations to the embodiments of the present disclosure according to the disclosure of the application document without departing from the spirit and scope of the present disclosure.

## Claims

1. A sunroof glass assembly, comprising:
a glass panel;
a sealing structure enclosing an edge of the glass panel, the glass panel is configured to be sealingly connected to a top frame of a vehicle by means of the sealing structure, and the sealing structure being provided with at least two detachable movable sealing structures which are located on two sides of the top frame; wherein
in a state in which the movable sealing structures are detached, a mounting space is formed between the glass panel and the top frame, and a mounting structure of a luggage carrier is capable of extending into the mounting space to be connected to the top frame.

2. The sunroof glass assembly according to claim 1, wherein,
the movable sealing structure comprises a movable sealing strip, which is provided with a movable sealing portion and a movable mounting portion which are connected to each other; the movable mounting portion is detachably mounted on an inner side of the glass panel through at least one clamping structure; and the movable sealing portion is located between the edge of the glass panel and the top frame.

3. The sunroof glass assembly according to claim 2, wherein,
the movable mounting portion is detachably mounted on the inner side of the glass panel through two of the clamping structures, the top frame is provided with a luggage carrier fixing structure which is located between the two of the clamping structures, and a mounting structure of the luggage carrier extends into the mounting space and is detachably connected to the luggage carrier fixing structure.

4. The sunroof glass assembly according to claim 2, wherein,
a supporting member is embedded in the movable sealing portion, and disposed to extend in a direction perpendicular to a direction in which the movable sealing portion is extruded.

5. The sunroof glass assembly according to claim 2, wherein,
the movable sealing portion comprises a first side surface and a second side surface which are opposite to each other, the first side surface of the movable sealing portion abuts against the edge of the glass panel, and the second side surface of the movable sealing portion is provided with a movable water-blocking portion which blocks a gap between the movable sealing portion and the top frame.

6. The sunroof glass assembly according to claim 2, wherein,
the clamping structure comprises a clamping sheet with a first end connected to an inner side surface of the glass panel, and a second end cooperated with the inner side surface of the glass panel to form a clamping recess into which the movable mounting portion is clamped.

7. The sunroof glass assembly according to claim 6, wherein,
the movable mounting portion comprises a first side surface which abuts against the second end of the clamping sheet, at least one protruding strip protrudes from the first side surface of the movable mounting portion, and the protruding strip is obliquely disposed towards an opening of the clamping recess and abuts against an inner wall surface of the clamping recess.

8. The sunroof glass assembly according to claim 6, wherein,
the movable mounting portion comprises a second side surface which abuts against the inner side surface of the glass panel, at least one bump protrudes from the second side surface of the movable mounting portion, and the bump abuts against the inner side surface of the glass panel.

9. The sunroof glass assembly according to claim 6, wherein,
the first end of the clamping sheet is bonded and fixed to the inner side surface of the glass panel by a bonding block.

10. The sunroof glass assembly according to claim 9, wherein,
a bonding surface of the bonding block is provided with at least one pre-bonding adhesive layer and at least one fixed adhesive layer, and wherein curing time of the pre-bonding adhesive layer is shorter than that of the fixed adhesive layer, and a bonding capability of the fixed adhesive layer is greater than that of the pre-bonding adhesive layer.

11. The sunroof glass assembly according to claim 10, wherein,
the fixed adhesive layer is made of PU glue, and the pre-bonding adhesive layer is made of 3M glue.

12. A vehicle, comprising the sunroof glass assembly according to any one of claims 1 to 11.

13. A luggage carrier, wherein in a state in which the movable sealing structure is removed, a mounting structure of the luggage carrier extends into the mounting space to be connected to the top frame of the vehicle according to claim 12.

14. A vehicle, comprising:
a glass panel;
a fixed sealing structure, wherein the glass panel is configured to be sealingly connected to a top frame of the vehicle through the fixed sealing structure, and the fixed sealing structure is provided with at least two mounting recesses; and
two luggage carriers each having at least one mounting structure, which extends from the mounting recess to an inner side of the glass panel to be connected to the top frame.
